Europäisches Patentamt

European Patent Office

Office européen des brevets

(19)

(11) **EP 0 333 467 B1**

(12) **EUROPEAN PATENT SPECIFICATION**

(45) Date of publication and mention
of the grant of the patent:
**10.01.1996  Bulletin 1996/02**

(51) Int Cl.$^6$: **G11B 11/10**, G11B 13/04

(21) Application number: **89302575.9**

(22) Date of filing: **16.03.1989**

(54) **Optical magnetic recording medium provided with high coercive force layer and low coercive force layer containing light rare earth**

Magneto-optischer Aufzeichnungsträger mit einer Schicht hoher Koerzitivkraft und einer Schicht niedriger Koerzitivkraft, welche leichte seltene Erden enthält

Milieu d'enregistrement magnétique optique muni d'une couche de force hautement coercitive et d'une couche de force bassement coercitive contenant des terres rares légères

(84) Designated Contracting States:
**DE FR GB NL**

(30) Priority: **18.03.1988 JP 65507/88**

(43) Date of publication of application:
**20.09.1989  Bulletin 1989/38**

(73) Proprietor: **CANON KABUSHIKI KAISHA
Tokyo (JP)**

(72) Inventor: **Tsunashima, Shigeru
Nagoya-shi, Aichi-ken (JP)**

(74) Representative:
**Beresford, Keith Denis Lewis et al
London WC1R 5DJ (GB)**

(56) References cited:
**EP-A- 0 258 978**          **EP-A- 0 291 248**
**US-A- 4 753 853**

- **"Collected Gists of Academic Lectures in the 11th Meeting of Applied Magnetic Society of Japan (1987) 3aD-6" with an English translation supplied by the applicant with letter dated 27.9.93**
- **PATENT ABSTRACTS OF JAPAN, unexamined applications, P field, vol. 10, no. 173, 18 June 1986 THE PATENT OFFICE JAPANESE GOVERNMENT page 56 P 469**

Remarks:
The file contains technical information submitted after the application was filed and not included in this specification

**Description**

BACKGROUND OF THE INVENTION

Field of the Invention

This invention relates to an optical magnetic recording medium which performs recording of an information by forming bits of the reverses magnetic district by use of a laser beam and an external magntic field and performs reading of the information by utilizing the magnetic optical effect by use of a polarized laser beam.

Related Background Art

In the prior art, in optical magnetic recording medium, it has been difficult to find out a single magnetic material, which is easy in recording due to appropriately low Curie temperature, and yet high in storage stability of information due to high coercive force, and further good in reading characteristic due to large magnetic optical Kerr rotational angle. For this reason, an optical magnetic recording medium having two different magnetic materials laminated with separated necessary functions has been proposed in Japanese Laid-open Publication No. 57-78652 (corresponding U.S. Patent 4,799,114) as reflected in the preamble of claims 1 and 7. This recording medium comprises two layers of a high coercive force layer haivng a low Curie temperature which is vertically magnetizable and a low coercive force having a high Curie temperature, and the high coercive force layer and the low coercive force layer are exchange bonded to each other. In the high coercive force having low Curie temperature, recording and storage of information are performed, the recorded information is transferred to the low coercive force layer, and reading of information is performed in the low coercive force layer having high Curie temperture and has great magnetic optical Kerr rotational angle. As the material of such recording medium, Tb-Fe, Dy-Fe are disclosed for the high coercive force layer, and Gd-Fe, Gd-Co for the low coercive force.

Further, Japanese Laid-open Patent Publication No. 61-117747 also discloses an optical magnetic recording medium in which a rare earth-iron group amorphous alloy of Gd-Fe-Co with preferential iron group sub-lattice magnetization is used for the high coercive force layer, and a rare earth-iron group amorphous alloy of Tb-Fe with also preferential iron group sub-lattice magnetization for the low coercive force layer.

On the other hand, the recording density of optical magnetic recording medium is restricted by the wavelength of the laser beam used, and the recording density becomes higher as the wavelength becomes shorter. However, a semiconductor laser of short wavelength is presently low in output, and also short in life. Accordingly, although a wavelength of about 800 nm is primarily used at present time, developments of short wavelength laser have been also actively done.

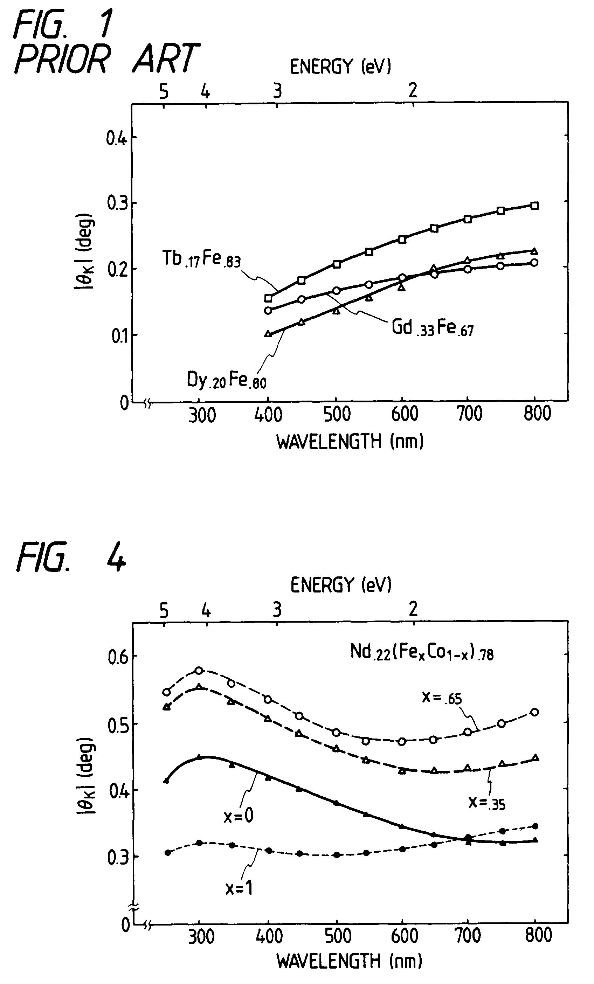

Thus, although the effect of higher recording density can be obtained by making the wavelength of laser shorter, by use of a heavy rare earth (e.g. Gd. Tb, Dy, Ho)-iron group (e.g. Fe, Co, Ni) amorphous alloy such as Gd-Fe, Gd-Co, Gd-Fe-Co or Tb-Fe, Dy-Fe, etc., there is the drawback that the magnetic optical effect becomes smaller as the wavelength becomes shorter, whereby the reading characteristic is worsened. Fig. 1 shows the wavelength dependency of the magnetic optical Kerr rotational angle $\theta_k$ of a magnetic film comprising such Gd $_{.33}$Fe$_{.67}$, Tb$_{.17}$Fe$_{.83}$ and Dy$_{.20}$Fe$_{.80}$. It can be seen that these show relatively larger Kerr rotational angles at wavlength of about 800 nm, but Kerr angles become smaller as the wavelength becomes shorter.

On the other hand, it has been known in an alloy of a light rare earth such as Nd, Pr, Ce, Sm, etc, with an iron group, the magnetic optical effect does not become smaller, or contrariwise become greater even when the wavelength may become shorter. However, such light rare earth-iron group amorphous alloy is a ferromagnetic material, having great saturated magnetization, which can become a vertically magnetized film with low coercive force and therefore is not suitable for optical magnetic recording medium.

Accordingly, for example, in "Collected Gists of Academic Lectures in the 11th Meeting of Applied Magnetic Society of Japan (1987) 3aD-6", etc., there is a Nd-Dy-Fe-Co single layer film in which a light rare earth of Nd and a heavity rare earth of Dy are used as the rare earth and formed into an alloy together with Fe, Co of iron group. However, also in such Nd-Dy-Fe-Co singly layer film, in order to obtain sufficient coercive force as the optical magnetic recording medium, Nd can be added only in a slight amount, and therefore the effect of improvement of the magnetic optical effect in short wavelength was small.

SUMMARY OF THE INVENTION

An object of the present invention is to provide an optical magnetic recording medium which has solved the problems of the prior art as described above, can perform recording easily, is excellent in stability of recorded information due to great coercive force, and yet has good reading characteristic in short wavelength.

The above object of the present invention can be accomplished by an optical magnetic recording medium according to claims 1 and 7.

BRIEF DESCRIPTION OF THE DRAWINGS

Fig. 1 is a graph showing the wavelength dependency of magnetic optical Kerr rotational angle $\theta_k$ of the optical magnetic recording medium by use of a heavy rare earth-iron group amorphous alloy of the prior art.

Fig. 2 and Fig. 3 each show a schematic sectional view of an embodiment of the optical magnetic recording medium based on the present invention.

Fig. 4 is a graph showing the wavelength dependency of the magnetic optical Kerr rotational angle $\theta_k$ of the Nd-Fe-Co film.

Fig. 5 is a graph showing the magnetization curve of a multi-layer film comprising Nd-Co and Tb-Fe.

Fig. 6 is a graph showing the magnetic optical Kerr hysteresis curve of a multi-layer film comprising Nd-Co and Tb-Fe.

Fig. 7 is an illustration showing the structure of the sample comprising Nd-Tb-Fe-Co and Tb-Fe-Co.

Fig. 8 is a graph showing comparison between the magnetic optical Kerr hysteresis curves of the Nd-Tb-Fe-Co single layer film, the Nd-Tb-Fe-Co/Tb-Fe-Co double layer film and the Tb-Fe-Co single layer film.

## DESCRIPTION OF THE PREFERRED EMBODIMENT

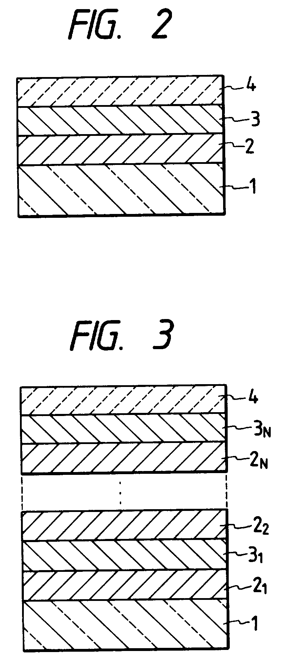

Fig. 2 is a schematic sectional view showing an embodiment of the optical recording medium based on the present invention. In Fig. 2, 1 is a transparent substrate comprising glass, plastic, etc., 2 is a low coercive force layer comprising a rare earth-iron group amorphous alloy including light rare earth, 3 is a high coercive force layer comprising a rare earth-iron group amorphous alloy having readily magnetizable axis in the direction perpendicular to the film surface, and 4 is a protective layer comprising a dielectric material such as $SiO$, $Si_3N_4$, etc. Here, the low coercive force layer 2 and the high coercive force layer 3 are exchange bonded to each other.

In carrying out recording on such recording medium, the two magnetic layers are previously magnetized in one direction, and while applying externally a bias magnetic field in the direction opposite thereto, a laser beam modulated corresponding to the information signals is scanned. Then, the portion irradaited with the laser beam is once heated to around the Curie temperature of the high coercive force layer 3, and, when cooled, is magnetized to the opposite direction to the surrounding through the action of the bias magnetic field. Thus, the information is accumulated in the form of bit of the reversed magnetic district.

On the other hand, the information thus recorded is irradiated with a laser beam of no modulation, low output linearly polarized from the tranaparent substrate side, and is read from the reflected light thereof which has received modulation to polarized state through the magnetic optical effect of the low coercive force layer 2.

In the single layer film comprising a rare earth-iron amorphous alloy including light rare earth and heavy rare earth as shown in the prior art, for making the coercieve force practiclly sufficient value, a considerable amount of heavy rare earth must be added. Whereas, addition of such large amount of heavy rare earth will damage the improvement effect of the magnetic optical effect in short wavelength. In contrast, the present embodiment, by arranging a layer with much light rare earth on the surface where light is incident and having a layer with higher coercive force on the other surface, can maintain magnetization of the low coercive force layer through the exchange bonding without damaging the improvement effect of the magnetic optical effect in short wavelength. In other words, in the present embodiment, the low coercive force layer is increased in apparent coercive force through the effect of exchange bonding from the high coercive force layer, whereby the same fine magnetic district as the high coercive force layer can be retained and also stability of the recorded information to the magnetic field from outside is increased. The greatness of the effect of the exchange bonding is proportional to the greatness of the exchange force between the two layers, and inversely proportional to saturated magnetization and film thickenss thereof. The greatness of the exchange force between the two layers will vary with the combination of those materials, and there exist combinations of materials with greater exchange force and combinations of materials with smaller exchange force.

One specific feature of the present invention resides in discovery of the fact that even in a combination of rare earth-iron group amorphous alloy including light rare earth and a rare earth-iron amorphous alloy, a great effect of exchange bonding to the same extent as the combination mutually between the heavy rare earth-iron groups amorphous alloys can be obtained.

Concerning film thickness, since it may considered that both the rare earth-iron group amorphous alloy and the heavy rare earth-iron group alloy have the same extent of absorption, no sufficient magnetic optical effect can be obtained with a film thickness less than about some 100 Å.

Concerning saturated magnetization, since the heavy rare earth-iron group amorphous alloy is a ferrimagnetic material, the saturated magnetization can be made smaller while maintaining the magnetic optical effect large, by bringing its composition to near the compensation composition. Whereas, since the light rare earth-iron group amorphous alloy is a ferromagnetic material, it is impossible to make the saturated magnetization small, while maintaining the magnetic optical effect large. Accordingly, it may be also considered that no stable vertically magnetized state can be obtained, if the light rare earth-iron group amorphous alloy is made a low coercive force layer of two layer exchange bonded film. An embodiment further improved in this point is shown below.

Fig. 3 is a schematic sectional view showing another embodiment of the optical magnetic recording medium based on the present invention. In Fig. 3, the same members as in Fig. 2 are affixed with the same symbols, and detailed description thereof is omitted.

This embodiment comprises N sets (N is an integer of 2 or more) of low coercive force layers $2_1$, $2_2$, ..., $2_N$ and high coercive force layers $3_1$, ..., $3_N$ which are the same as the low coercive force layer 2 and the high coercive force layer 3 in Fig. 2, alternately laminated. These magnetic layers are also exchange bonded to each other.

The effect of exchange bonding is inversely proportional to saturated magnetization and film thickness. This embodiment compensates for the small effect of exchange bonding with great saturated magnetization by making the film thickness thinner. Also, in this embodiment, the low coercive force layer sandwiched between high coercive force layers receives exchange force from the both high coercive force layers existing above and below thereof, whereby there is the advantage that the exchange effect is doubled.

In Fig. 3, it is now supposed to read by irradiation of a laser beam from the substrate 1 side. The film thickness of the low coercive force layer $2_1$ is not so thick as to obtain great magnetic optical effect by reflecting sufficiently the light, and considerable light reaches the high coercive force layer $3_1$. Since the high coercive force layer has inherently little magnetic optical effect, the light reflected against this layer is reflected without so great magnetic optical interaction. However, if this high coercive force layer $3_1$ is considerably thin, the light further transmits through this layer to reach the low coercive force layer $2_2$ having great magnetic opticl effect. Thus, by laminating alternately thin low coercive force layer and thin high coercive force layer, light can interact with a plurality of low coercive force layers having great magnetic optical effect, and consequently a great magnetic optical effect can be obtained. The film thickness of the layer to be laminated alternately may be about 30 to 300 Å, preferably about 50 to 150 Å, with 1 Å = $10^{-10}$ m

In other words, no great magnetic optical effect can be obtained with only one layer of thin low coercive force layer, by alternate lamination together with high coercive force layers, a great magnetic optical effect can be obtained, and further due to thin film thickness of the respective low coercive force layers, great effect of exchange bonding can be also obtained.

As the low coervice force layer as described above, for example, an amorphous alloy of at least one element selected from Nd, Pr, Ce and Sm with at least one element selected from iron group elements such as Fe, Co and Ni can be used. The light rare earth element may be desirably Nd, Pr, preferably Nd from the point that the magnetic optical effect is great in short wavelength. As the iron group, Fe, Co may be desirable, more preferably Fe-Co alloy from the point that greater magnetic optical effect with great magnetic moment can be obtained. When light rare earth element is generally represented by LR, this alloy is represented by the following formula.

$$LR_X(Fe_{1-Y}Co_Y)_{1-X}.$$

Here, X and Y represent atomic ratios, with X being $0.1 \leq X \leq 0.4$, desirably $0.2 \leq X \leq 0.3$, Y being $0 \leq Y \leq 1$, desirably $0.2 \leq Y \leq 1$, more desirably $0.2 \leq Y \leq 0.8$. If X is small, saturated magnetization becomes too great, while if X is too large, magnetic optical effect will be reduced.

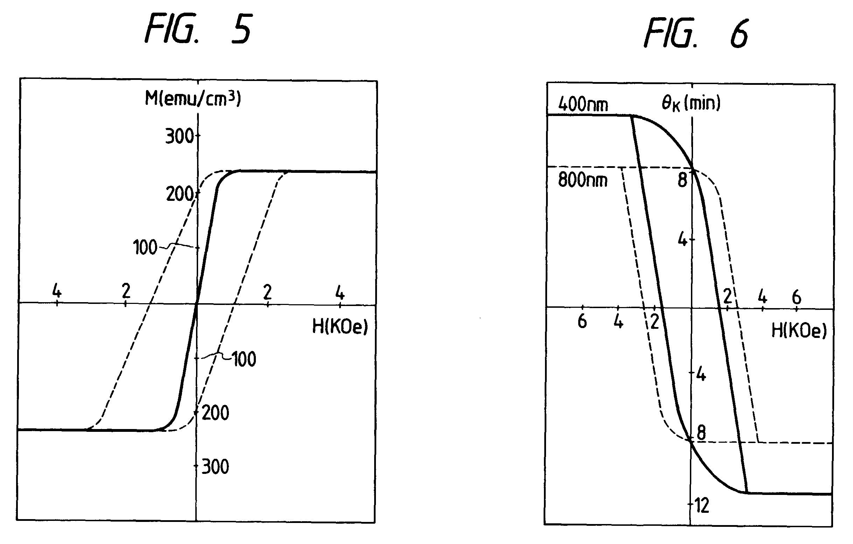

Fig. 4 shows the dependency of the magnetic optical Kerr rotational angle $\theta_k$ of the magnetic layer comprising $Nd_{.22}Fe_{0.78}$, $Nd_{.22}(F_{.65}Co_{.35})_{.78}$, $Nd_{.22}(Fe_{.35}Co_{.65})_{.78}$ and $Nd_{.22}Co_{.78}$ on the wavelength of reading light. Nd-Fe and Nd-Co have Kerr rotational angles $\theta_k$ with the same extent of largeness in long wavelength (700 to 800 nm), but Nd-Co is larger in Kerr rotational angle in short wavelength (to 600 nm). Nd-Fe-Co is larger in Kerr rotational angle than Nd-Co in the whole region of measured wavelength (300 to 800 nm). Accordingly, as the material for low coercive force layer, Nd-Fe, desirably Nd-Co, more desirably Nd-Fe-Co may be employed. When compared with Fig. 1, it can be seen that even by use of Nd-Fe, the Kerr rotational angle is larger in short wavelength than heavy rare earth-iron group amorphous alloy.

Also, for lowering saturated magnetization, a heavy rare earth may be also added in the low coercive force layer in an amount which does not lower the magnetic optical effect in short wavelength so much. In this case, an amorphous alloy of at least one element selected from light rare earth elements such as Nd, Pr, Ce, Sm, etc., at least one element selected from heavy rare earth elements such as Gd, Tb, Dy, Ho, etc. and at least one element selected from iron group elements such as Fe, Co, Ni, etc. may be employed. As the light rare earth element, Nd, Pr may be desirable, more desirably Nd. As the heavy earth element, Tb, Dy may be also available, but desirably Gd from the point that the magnetic optical effect is not lowered in short wavelength. As the iron group element, Fe, Co are desirable, but more desirably Fe-Co alloy. When light rare earh element is represented by LR, and heavy rare earth element generally by HR, such alloy is represented by the following formula.

$$LR_x HR_y (Fe_{1-z}Co_z)_{1-x-y}$$

Here, x, y and z are atomic ratios. x may be $0.1 \leq x \leq 0.4$, desirably $0.1 \leq x \leq 0.3$, y may be $0.05 \leq y \leq 0.3$, desirably $0.05 \leq y \leq 0.2$, and z may be $0 \leq z \leq 1$, desirably $0.2 \leq z \leq 0.8$. When a rare earth-iron group amorphous alloy including light rare earth and heavy rare earth is used as single layer for the low coercive force layer, the thickness of the low coercive force layer may be about 100 to 500 Å, desirably about 150 to 300 Å.

On the other hand, as the high coercive force layer, heavy rare earth-iron group amorphous alloy such as Tb-Fe-Co, Dy-Fe-Co, Tb-Dy-Fe-Co, etc. may be suitably employed, and a light earth element may be slightly contained therein. The film thickness of the high coercive force layer may be about 100 to 2000 Å, desirably about 500 to 1000 Å.

In the present invention, the coercive force of the low coercive force layer should be desirably about 1 KOe or lower with 1KOe = $(10^6/4\pi)$ A/m $\approx$ 79,6·$10^3$ A/m. The coercive force of the high coercive force layer is set at several KOe or higher, desirably 5 KOe or higher, more desirably 10 KOe or higher. The Curie temperature may be higher for either of the magnetic fibers, but it is desirable that the lower coercive force layer should be higher so that the magnetic optical effect may not be reduced even when the temperature may be elevated by irradiation of reading light.

Example 1

As described below, an optical magnetic recording medium having a constitution as shown in Fig. 3 was prepared. First, according to the vacuum vapor deposition method, on a glass substrate were vapor deposited a Nd-Co film of a light rare earth-iron group amorphous alloy as the low coercive force layer and a Tb-Fe film as the high coercive force layer alternately with a thickness of about 50 Å, followed finally by attachment of Tb-Fe with a thickness, of 150 Å to a total film thickness of about 400 Å. Then, SiO was attached as the protective film. These were all formed continuously without breaking vacuum so that effective exchanged bonding could work between the magnetic layers. The vacuum degree during vapor deposition was $10^{-5}$ Torr. The compositions of the respective layers were made $Nd_{.27}Co_{.73}$ and $Tb_{.24}Fe_{.76}$.

Next, the magnetic characteristics of this medium were examined. The results are shown in Fig. 5 and Fig. 6. The Kerr effect was measured from the substrate side.

In Fig. 5, the axis of abscissa shows magnetic field and the axis of ordinate magnetization. The solid line indicates the characteristic in the direction in parallel to the film surface and the broken line the characteristic in the direction perpendicular thereto. As can be seen from the magnetization curve, the magnetic layer of the present invention has become a vertically magnetized film with an angular ratio approximate to 1. Winc the saturated magnetization substantially coincides with the difference in magnetization between the Nd layer and the Tb layer, they may be considered to be ferrimagnetially bonded.

Fig. 6 is a Kerr loop when the wavelength of the reading light is 400 nm (shown by the solid line) and 800 nm (shown by the broken line). Here, the axis of abscissa shows magnetic field and the axis of ordinate Kerr rotational angle. In this Example, saturated Kerr rotational angle is larger in the case of 400 nm than in the case of 800 nm. This is because there is contribution to the Kerr effect by Nd-Co on the shorter wavelength side.

Example 2

A sample was prepared on a glass substrate according to the vacuum vapor deposition method, by vapor depositing Nd-Tb-Fe-Co film of a rare earth-iron group amorphous alloy including light rare earth and heavy rare earth as the low coercive force layer to a thickness of 150 Å and a Tb-Fe-Co film as the high coercive force layer to a thickness of 850 Å. Then, as the protective film, SiO was attached. These were all formed continuously without breaking vacuum so that effective exchange could work between the magnetic layers. The vacuum degree during vapor deposition was $10^{-6}$ Torr or less.

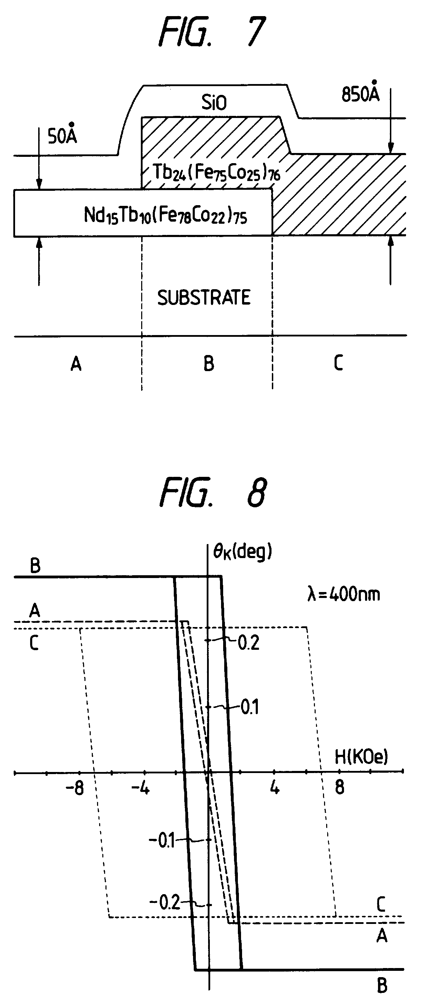

The sample was prepared by use of a mask so that a singly layer portion could be also formed at the same time, as shown by the cross-section in Fig. 7, for comparison with the single layer portion. The compositions of the respective layers were $Nd_{.15}Tb_{.10}(Fe_{.78}Co_{.22})_{.75}$ for one and $Tb_{.24}(Fe_{.75}Co_{.25})_{.76}$ for the other.

Next, Kerr loop of this sample was measured. Measurement was conducted from the glass substrate side. The results are shown in Fig. 8.

In Fig. 8, the respective curves indicate Kerr loops of the Nd-Tb-Fe-Co single layer portion A, the Nd-Tb-Fe-Co/Tb-Fe-Co double layer portion B and the Tb-Fe-Co single layer portion C in the case when the reading light has a wavelength of 400 nm. The Nd-Tb-Fe-Co single layer portion A contains much Nd to have great magnetization, whereby coercive force is very small and also angular ratio is bad. On the other hand, Nd-Tb-Fe-Co of the Nd-Tb-Fe-Co/Tb-Fe-Co double layer portion B has greater coercive force through the exchange bonding with Tb-Fe-Co, and angular ratio is improved to 1. Further, the Kerr rotational angle $\theta_k$ of the Nd-Tb-Fe-Co/Tb-Fe-Co double layer portion B is considerably larger than that of the Tb-Fe-Co single layer portion C. This is because three is contribution to the Kerr effect by Nd on the shorter wavelength side.

The present invention is not limited to the above Examples, but various applications are possible. For example, between the substrate and the low coercive force layer, reflection preventive layer, insulating layer, etc. may be also provided. The present invention includes all of such application examples without departing from the scope of claims.

**Claims**

1. A magnetooptical recording medium including a vertically magnetizable first magnetic layer (3) comprising a rare earth-iron group amorphous alloy and a second magnetic layer (2) comprising a rare earth-iron group amorphous alloy, the second magnetic layer having a lower coercive force than that of the first magnetic layer and being exchange-coupled to the first magnetic layer, the medium being characterised in comprising at least two sets of layers with said first ($3_1$, $3_2$ ... $3_N$) and second ($2_1$, $2_2$ ... $2_N$) layers alternating such that each said second layer is sandwiched between two of said first layers, and said second magnetic layers ($2_1$, $2_2$ ... $2_N$) have the following composition:

$$LR_X (Fe_{1-Y} Co_Y)_{1-X}$$

where LR is Nd, Pr, Ce or Sm and
$0.1 \leq X \leq 0.4$ and $0 \leq Y \leq 1$.

2. A magnetooptical recording medium according to claim 1, in which the magnetooptical signal is primarily derived from a plurality of second layers.

3. A magnetooptical recording medium according to claim 1 or 2, wherein each of said first ($3_1$, $3_2$ ... $3_N$) and second ($2_1$, $2_2$ ... $2_N$) magnetic layers has a thickness in the range of 3 to 30 nm.

4. A magnetooptical recording medium according to claim 3, wherein each of said first and second magnetic layers has a thickness in the range 5 to 15 nm.

5. A magnetooptical recording medium according to any one of claims 1 to 4, wherein the following condition is satisfied:

$$0.2 \leq Y \leq 0.8.$$

6. A magnetooptical recording medium according to claim 5, wherein each second magnetic layer comprises Nd-Fe-Co, Nd-Co or Nd-Fe.

7. A magnetooptical recording medium including a vertically magnetizable first magnetic layer (3) comprising a rare earth-iron group amorphous alloy and a second magnetic layer (2) comprising a rare earth-iron group amorphous alloy, a second magnetic layer having a lower coercive force than that of first magnetic layer and being exchange-coupled to the first magnetic layer, the medium being characterised in at least two sets of layers with said first ($3_1$, $3_2$, ... $3_M$) and second ($2_1$, $2_2$, ... $3_N$) layers alternating such that each said second layer is sandwiched between two of said first layers, and said second magnetic layers ($2_1$, $2_2$, ... $2_N$) having the following composition:

$$LR_x \, HR_Y \, (Fe_{1-z}Co_z)_{1-x-y}$$

where LR is Nd, Pr, Ce or Sm, HR is Gd, Tb, Dy or Ho and
$0.1 \leq X \leq 0.4$; $0.05 \leq Y \leq 0.4$ and $0 \leq Z \leq 1$.

8. A magnetooptical recording medium according to claim 7, wherein said first magnetic layer has a thickness in the range of 10 to 200 nm, and said second magnetic layer has a thickness in the range of 10 to 50 nm.

9. A magnetooptical recording medium according to claim 8, wherein said second magnetic layer has a thickness in the range of 15 to 30 nm.

10. A magnetooptical recording medium according to any one of claims 7 to 9, wherein the following condition is satisfied:
$0.1 \leq X \leq 0.3$, $0.05 \leq Y \leq 0.2$ and $0.2 \leq Z \leq 1$.

11. A magnetooptical recording medium according to claim 10, wherein the following condition is satisfied:
$$0.2 \leq Z \leq 0.8.$$

12. A magnetooptical recording medium according to any one of claims 7 to 11, in which HR is Gd.

13. A magnetooptical recording medium according to any one of the preceding claims, wherein each second magnetic layer (2) has a coercive force of 1 KOe or less.

14. A magnetooptical recording medium according to any one of the preceding claims, wherein each first magnetic layer (3) has a coercive force of several KOe or more.

15. A magnetooptical recording medium according to claim 14, wherein each first magnetic layer (3) has a coercive force of 5 KOe or more.

16. A magnetooptical recording medium according to claim 15, wherein each first magnetic layer (3) has a coercive force of 10 KOe or more.

17. A magnetooptical recording medium according to any preceding claim, wherein the medium further comprises a transparent substrate layer (1).

18. A magnetooptical recording medium according to claim 17, wherein said transparent substrate layer (1) comprises glass or plastic.

19. A method of recording information on a medium as defined in any of claims 1 to 18, which comprises the steps of:

(a) premagnetising said magnetic layers in one direction, (b) applying externally a biased magnetic field in an opposite direction thereto, (c) directing a laser beam onto said medium, said laser beam being modulated in accordance with the information to be recorded incident on said medium.

20. A method of reading information, recorded on a medium as defined in any of claims 1 to 18, which comprises the steps of:
irradiating the medium with a beam of radiation, and detecting changes in the polarisation direction of the reflected beam caused by magneto-optical modulation of the second magnetic layer (3).

**Patentansprüche**

1. Magneto-optisches Aufzeichnungsmaterial, enthaltend eine vertikal magnetisierbare erste magnetische Schicht (3), umfassend eine amorphe Legierung der Seltenerd-Eisengruppe, und eine zweite magnetische Schicht (2), umfassend eine amorphe Legierung der Seltenerd-Eisengruppe, wobei die zweite magnetische Schicht eine niedrigere Koerzitivkraft als die der ersten magnetischen Schicht hat und an die erste magnetische Schicht Austausch-gekoppelt ist, wobei das Material dadurch gekennzeichnet ist, daß es mindestens zwei Gruppen von Schichten umfaßt, wobei die ersten ($3_1$, $3_2$, ..., $3_N$) und die zweiten ($2_1$, $2_2$,..., $2_N$) Schichten sich abwechseln, so daß jede zweite Schicht sandwichartig zwischen zwei von den ersten Schichten eingelagert ist und die zweiten magnetischen Schichten ($2_1$, $2_2$, ..., $2_N$) die folgende Zusammensetzung haben:

$$LR_X \ (Fe_{1-Y}Co_Y)_{1-X},$$

worin LR Nd, Pr, Ce oder Sm ist und

$$0,1 \leq X \leq 0,4 \text{ und } 0 \leq Y \leq 1.$$

2. Magneto-optisches Aufzeichnungsmaterial nach Anspruch 1, wobei das magneto-optische Signal hauptsächlich von einer Vielzahl von zweiten Schichten abgeleitet wird.

3. Magneto-optisches Aufzeichnungsmaterial nach Anspruch 1 oder 2, wobei jede von den ersten ($3_1$, $3_2$, ..., $3_N$) und den zweiten ($2_1$, $2_2$,..., $2_N$) magnetischen Schichten eine Dicke in dem Bereich von 3 bis 30 nm hat.

4. Magneto-optisches Aufzeichnungsmaterial nach Anspruch 3, wobei jede von den ersten und den zweiten magnetischen Schichten eine Dicke in dem Bereich von 5 bis 15 nm hat.

5. Magneto-optisches Aufzeichnungsmaterial nach einem der Ansprüche 1 bis 4, wobei die folgende Bedingung erfüllt ist:
$$0,2 \leq Y \leq 0,8.$$

6. Magneto-optisches Aufzeichnungsmaterial nach Anspruch 5, wobei jede zweite magnetische Schicht Nd-Fe-Co, Nd-Co oder Nd-Fe umfaßt.

7. Magneto-optisches Aufzeichnungsmaterial, enthaltend eine vertikal magnetisierbare erste magnetische Schicht (3), umfassend eine amorphe Legierung der Seltenerd-Eisengruppe, und eine zweite magnetische Schicht (2), umfassend eine amorphe Legierung der Seltenerd-Eisengruppe, wobei eine zweite magnetische Schicht eine niedrigere Koerzitivkraft als die der ersten magnetischen Schicht hat und an die erste magnetische Schicht Austausch-gekoppelt ist, wobei das Material durch mindestens zwei Gruppen von Schichten gekennzeichnet ist, wobei die ersten ($3_1$, $3_2$, ..., $3_N$) und die zweiten ($2_1$, $2_2$,..., $2_N$) Schichten sich abwechseln, so daß jede zweite Schicht sandwichartig zwischen zwei von den ersten Schichten eingelagert ist und die zweiten magnetischen Schichten ($2_1$, $2_2$, ..., $2_N$) die folgende Zusammensetzung haben:

$$LR_X \ HR_Y \ (Fe_{1-Z}Co_Z)_{1-X-Y},$$

worin LR Nd, Pr, Ce oder Sm ist, HR Gd, Tb, Dy oder Ho ist und
$$0,1 \leq X \leq 0,4; \ 0,05 \leq Y \leq 0,4 \text{ und } 0 \leq Z \leq 1.$$

8. Magneto-optisches Aufzeichnungsmaterial nach Anspruch 7, wobei die erste magnetische Schicht eine Dicke in dem Bereich von 10 bis 200 nm hat und die zweite magnetische Schicht eine Dicke in dem Bereich von 10 bis 50 nm hat.

9. Magneto-optisches Aufzeichnungsmaterial nach Anspruch 8, wobei die zweite magnetische Schicht eine Dicke in dem Bereich von 15 bis 30 nm hat.

10. Magneto-optisches Aufzeichnungsmaterial nach einem der Ansprüche 7 bis 9, wobei die folgende Bedingung erfüllt ist:
$$0,1 \leq X \leq 0,3, \ 0,05 \leq Y \leq 0,2 \text{ und } 0,2 \leq Z \leq 1.$$

11. Magneto-optisches Aufzeichnungsmaterial nach Anspruch 10, wobei die folgende Bedingung erfüllt ist:
$$0,2 \leq Z \leq 0,8.$$

12. Magneto-optisches Aufzeichnungsmaterial nach einem der Ansprüche 7 bis 11, wobei HR Gd ist.

13. Magneto-optisches Aufzeichnungsmaterial nach einem der vorhergehenden Ansprüche, wobei jede zweite magnetische Schicht (2) eine Koerzitivkraft von 1 KOe oder weniger hat.

14. Magneto-optisches Aufzeichnungsmaterial nach einem der vorhergehenden Ansprüche, wobei jede erste magnetische Schicht (3) eine Koerzitivkraft von mehreren KOe oder mehr hat.

15. Magneto-optisches Aufzeichnungsmaterial nach Anspruch 14, wobei jede erste magnetische Schicht (3) eine Koerzitivkraft von 5 KOe oder mehr hat.

16. Magneto-optisches Aufzeichnungsmaterial nach Anspruch 15, wobei jede erste magnetische Schicht (3) eine Koerzitivkraft von 10 KOe oder mehr hat.

17. Magneto-optisches Aufzeichnungsmaterial nach einem der vorhergehenden Ansprüche, wobei das Material ferner eine transparente Trägerschicht (1) umfaßt.

18. Magneto-optisches Aufzeichnungsmaterial nach Anspruch 17, wobei die transparente Trägerschicht (1) Glas oder Kunststoff umfaßt.

19. Verfahren zum Aufzeichnen von Information auf einem Material, wie in einem der Ansprüche 1 bis 18 definiert, das die folgenden Schritte umfaßt:

(a) Vormagnetisieren der magnetischen Schichten in einer Richtung, (b) externes Anlegen eines magnetischen Vorspannungsfelds in einer dazu entgegengesetzten Richtung, (c) Richten eines Laserstrahls auf das Material, wobei der Laserstrahl beim Einfall auf das Material gemäß der aufzuzeichnenden Information moduliert wird.

20. Verfahren zum Lesen von Information, die auf einem Material, wie in einem der Ansprüche 1 bis 18 definiert, aufgezeichnet ist, das die folgenden Schritte umfaßt:
Bestrahlen des Materials mit einem Strahlungsbündel und Bestimmen von Änderungen der Polarisationsrichtung des reflektierten Strahls, die durch magneto-optische Modulation der zweiten magnetischen Schicht (3) verursacht werden.

## Revendications

1. Support d'enregistrement magnéto-optique comportant une première couche magnétique magnétisable verticalement (3) comprenant un alliage amorphe terres rares-groupe ferreux et une deuxième couche magnétique (2) comprenant un alliage amorphe terres rares-groupe ferreux, la deuxième couche magnétique ayant une force coercitive plus faible que celle de la première couche magnétique et étant liée par échange à la première couche magnétique, le support étant caractérisé en ce qu'il comprend au moins deux séries de couches, lesdites premières ($3_1$, $3_2$, ..., $3_N$) et deuxièmes ($2_1$, $2_2$, ..., $2_N$) couches alternant de telle façon que chacune desdites deuxièmes couches soit intercalée entre deux desdites premières couches et en ce que lesdites deuxièmes couches magnétiques ($2_1$, $2_2$, ..., $2_N$) ont la composition suivante :

$$LR_X \ (Fe_{1-Y} \ Co_Y)_{1-X}$$

où LR est Nd, Pr, Ce ou Sm et
$0,1 \le X \le 0,4$ et $0 \le Y \le 1$.

2. Support d'enregistrement magnéto-optique selon la revendication 1, dans lequel le signal magnéto-optique est principalement dérivé d'une pluralité de deuxièmes couches.

3. Support d'enregistrement magnéto-optique selon la revendication 1 ou 2, dans lequel chacune desdites premières ($3_1$, $3_2$, ..., $3_N$) et deuxièmes ($2_1$, $2_2$, ..., $2_N$) couches magnétiques a une épaisseur de l'ordre de 3 à 30 nm.

4. Support d'enregistrement magnéto-optique selon la revendication 3, dans lequel chacune desdites premières et deuxièmes couches magnétiques a une épaisseur de l'ordre de 5 à 15 nm.

5. Support d'enregistrement magnéto-optique selon l'une quelconque des revendications 1 à 4, dans lequel la condition suivante est satisfaite :
$$0,2 \le Y \le 0,8.$$

6. Support d'enregistrement magnéto-optique selon la revendication 5, dans lequel chaque deuxième couche magnétique comprend Nd-Fe-Co, Nd-Co ou Nd-Fe.

7. Support d'enregistrement magnéto-optique comportant une première couche magnétique magnétisable verticalement (3) comprenant un alliage amorphe terres rares-groupe ferreux et une deuxième couche magnétique (2) comprenant un alliage amorphe terres rares-groupe ferreux, la deuxième couche magnétique ayant une force coercitive plus faible que celle de la première couche magnétique et étant liée par échange à la première couche magnétique, le support étant caractérisé par au moins deux séries de couches, lesdites premières ($3_1$, $3_2$, ..., $3_N$) et deuxièmes ($2_1$, $2_2$, ..., $2_N$) couches alternant de telle façon que chacune desdites deuxièmes couches soit intercalée entre deux desdites premières couches et en ce que lesdites deuxièmes couches magnétiques ($2_1$, $2_2$, ..., $2_N$) ont la composition suivante :

$$LR_x \ HR_y \ (Fe_{1-z} \ Co_z)_{1-x-y}$$

où LR est Nd, Pr, Ce ou Sm, HR est Gd, Tb, Dy ou Ho et
$0,1 \le x \le 0,4$, $0,05 \le y \le 0,4$ et $0 \le z \le 1$.

8. Support d'enregistrement magnéto-optique selon la revendication 7, dans lequel ladite première couche magnétique a une épaisseur de l'ordre de 10 à 200 nm et ladite deuxième couche magnétique a une épaisseur de l'ordre de 10 à 50 nm.

9. Support d'enregistrement magnéto-optique selon la revendication 8, dans lequel ladite deuxième couche magnétique a une épaisseur de l'ordre de 15 à 30 nm.

10. Support d'enregistrement magnéto-optique selon l'une quelconque des revendications 7 à 9, dans lequel la condition suivante est satisfaite :
$$0,1 \le x \le 0,3, \ 0,05 \le y \le 0,2 \text{ et } 0,2 \le z \le 1.$$

11. Support d'enregistrement magnéto-optique selon la revendication 10, dans lequel la condition suivante est satisfaite :
$$0,2 \le z \le 0,8.$$

**12.** Support d'enregistrement magnéto-optique selon l'une quelconque des revendications 7 à 11, dans lequel HR est Gd.

**13.** Support d'enregistrement magnéto-optique selon l'une quelconque des revendications précédentes, dans lequel chaque deuxième couche magnétique (2) a une force coercitive de 1 KOe ou moins.

**14.** Support d'enregistrement magnéto-optique selon l'une quelconque des revendications précédentes, dans lequel chaque première couche magnétique (3) a une force coercitive de plusieurs KOe ou plus.

**15.** Support d'enregistrement magnéto-optique selon la revendication 14, dans lequel chaque première couche magnétique (3) a une force coercitive de 5 KOe ou plus.

**16.** Support d'enregistrement magnéto-optique selon la revendication 15, dans lequel chaque première couche magnétique (3) a une force coercitive de 10 KOe ou plus.

**17.** Support d'enregistrement magnéto-optique selon l'une quelconque des revendications précédentes, dans lequel le support comprend en outre une couche de substrat transparent (1).

**18.** Support d'enregistrement magnéto-optique selon la revendication 17, dans lequel ladite couche de substrat transparent (1) est constituée de verre ou de matière plastique.

**19.** Procédé d'enregistrement d'informations sur un support tel que celui défini selon l'une quelconque des revendications 1 à 18, qui comprend les étapes de :

(a) prémagnétisation desdites couches magnétiques dans une direction, (b) application externe d'un champ magnétique polarisé dans une direction opposée à la précédente, (c) projection d'un faisceau laser sur ledit support, ledit faisceau laser étant modulé en fonction des informations destinées à être enregistrées par incidence sur ledit support.

**20.** Procédé de lecture d'informations enregistrées sur un support tel que défini selon l'une quelconque des revendications 1 à 18, qui comprend les étapes : d'irradiation du support avec un faisceau de radiation, et de détection des changements dans la direction de la polarisation du faisceau réfléchi, provoqués par les modulations magnéto-optiques de la deuxième couche magnétique (3).

FIG. 1
PRIOR ART

FIG. 4

*FIG. 2*

*FIG. 3*

FIG. 6

FIG. 5

# FIG. 7

SiO

850Å

50Å

$Tb_{24}(Fe_{75}Co_{25})_{76}$

$Nd_{15}Tb_{10}(Fe_{78}Co_{22})_{75}$

SUBSTRATE

A          B          C

# FIG. 8

B

A

C

$\theta_K(deg)$

$\lambda = 400nm$

0.2

0.1

H(KOe)

−8    −4         4    8

−0.1

−0.2

C

A

B